# EUROPÄISCHE PATENTSCHRIFT

(11) **EP 3 078 941 B1**
(45) Veröffentlichungstag und Bekanntmachung des Hinweises auf die Patenterteilung: **09.10.2019**
(21) Anmeldenummer: 16000816.5
(22) Anmeldetag: 11.04.2016
(51) Int. Cl.: G01D 11/30, F16M 13/02, F16B 9/02

(54) **SONDENHALTERUNG FÜR EIN MESSINSTRUMENT**
PROBE HOLDER FOR A MEASURING INSTRUMENT
FIXATION DE SONDE POUR UN INSTRUMENT DE MESURE

(30) Priorität: 11.04.2015 DE 102015005265
(43) Veröffentlichungstag der Anmeldung: 12.10.2016
(73) Patentinhaber: Testo SE & Co. KGaA, 79853 Lenzkirch (DE)
(72) Erfinder: BINDER, Jörg, 79877 Friedenweiler (DE); FRANK, Holger, 79822 Titisee-Neustadt (DE)
(74) Vertreter: Maucher Jenkins Patent- und Rechtsanwälte

(56) Entgegenhaltungen:
- EP-A1- 2 298 659
- EP-A1- 2 439 418
- EP-A2- 1 464 951
- DE-A1- 3 325 309
- DE-A1- 4 439 797
- DE-U1- 9 202 488
- US-A- 2 679 993

## Beschreibung

Die Erfindung betrifft eine Sondenhalterung für ein Messinstrument zur Messung eines Messwertes eines durch ein Rohr strömenden Fluids, mit einem an eine Öffnung in einer Wand, insbesondere eines Rohres, ansetzbaren Zugangselement, wobei das Zugangselement zumindest einen Teil einer durchgehenden Zugangsöffnung aufweist, welche zum Einsetzen des insbesondere stabförmigen Messinstruments in die Öffnung ausgebildet ist, und mit einem Halteelement, welches zur Befestigung der Sondenhalterung an der Wand des Rohres ausgebildet ist.

Sondenhalterungen werden üblicherweise dazu verwendet, um insbesondere stabförmige Messinstrumente (Sonden) an einer Wand eines Rohres befestigen zu können, wobei mittels des durch die Sondenhalterung gehaltenen und am Rohr befestigten Messinstruments ein Messwert eines durch das Rohr strömenden Fluids, insbesondere eines Gases oder einer Flüssigkeit, ermittelt wird. Derartige Sondenhalterungen werden üblicherweise mittels eines am Zugangselement ausgebildeten Halteelements direkt in die Öffnung an einer Wand eines Rohres eingesteckt und üblicherweise lediglich durch Reibungskräfte zwischen dem Zugangselement beziehungsweise dem Halteelement und einer Reibungsfläche an der Rohröffnung am Rohr befestigt. Ein Nachteil bestehender Sondenhalterungen besteht daher beispielsweise darin, dass das Entfernen und Anbringen der vorbekannten Sondenhalterung sehr umständlich zu handhaben ist, beispielsweise daher, dass die Sondenhalterung insbesondere durch zusätzliche Halterungsvorrichtungen am Rohr angeschraubt und gesichert werden muss. Darüber hinaus verbesserungswürdig ist die Möglichkeit der Fixierungsstabilität der Sondenhalterung an einer Wand eines Rohres, da diese bei vorbekannten Ausführungen häufig nur sehr unzureichend ist.

Die DE 44 39 797 A1 betrifft ein Befestigungselement für einen in eine Bohrung einer Wandung durchsteckbaren Körper, das durch eine Verrastmontage den Körper fixiert. Das Befestigungselement ist elastisch formbar ausgebildet und kann durch Druck auf geeignete Stellen derart verformt werden, dass bei Druck die Rasthaken entriegelt werden. Die DE 44 39 797 A1 liegt damit auf einem anderen technischen Gebiet, da hier ein Befestigungssystem beschrieben ist, womit eine Befestigung beispielsweise eines Ultraschallsensors an einem Karosserieteil eines Kraftfahrzeugs möglich gemacht werden soll und nicht eine Sondenhalterung an einer Wandung eines Rohrs.

Die EP 2 439 418 A1 betrifft eine Haltestruktur, umfassend einen Haltehauptkörper, welcher in ein Befestigungsloch einer Platte eingesetzt ist und im Einsetzzustand auch in einer Umfangsrichtung, welcher orthogonal zu einer Einsetzrichtung ist, drehbar ist, ein Kontaktstück, welches sich über einen Durchmesser des Haltehauptkörper ausdehnt und welches ein Kontaktelement auf der Plattenseite durch ein Einsetzen in das Befestigungsloch kontaktiert, um das Einsetzen zu begrenzen, ein vom Haltehauptkörper hervorstehendes Klemmstück, welches eine Lochwand des Befestigungsloch durch Einsetzen des Haltehauptkörpers in das Befestigungsloch kontaktiert, und welches sich zu einer Haltehauptkörperseite elastisch zurückzieht, um das Einsetzen zu ermöglichen, und welches in einem Zustand, bei welchem der Haltehauptkörper zu einem vorbestimmten Maß eingesetzt ist, den Ausgangszustand elastisch wiederherstellt, wobei die Platte zwischen das Klemmstück und das Kontaktstück geklemmt wird, und welches auch geeignet ist, durch einen erweiterten Durchmesserabschnitt durchgeführt zu werden, in welchem ein Durchmesser des Befestigungsloch in einem Ausgangszustand abschnittsweise erweitert ist, und ein Befestigungsstück, in welchem ein befestigtes Element an einer Endseite in der Einsetzrichtung bezüglich des Klemmstücks im Haltehauptkörper befestigt ist, und welches auch geeignet ist, den erweiterten Durchmesserabschnitt zu durchlaufen, wobei das Klemmstück und das Befestigungsstück in einer Position gebildet sind, welche in der Umfangsrichtung des Haltehauptkörpers verschieden ist, sodass sich eine Position, in welche der Haltehauptkörper bezüglich der Platte gedreht ist, wenn das Klemmstück den erweiterten Durchmesserabschnitt durchläuft, von einer Position unterscheidet, in welche der Haltehauptkörper bezüglich der Platte gedreht ist, wenn das Befestigungsstück den erweiterten Durchmesserabschnitt durchläuft.

Die US 2,679,993 betrifft ein Spannband mit Straffungsmitteln, welches dazu geeignet ist, um ein Messinstrument an einer Wandung befestigen zu können.

Die EP 2 298 659 A1 betrifft eine Verbindungsstruktur, die ein erstes Element und ein zweites Element verbindet, wobei das zweite Element mehrere Arretierungsvorsprünge aufweist und das erste Element mehrere Arretierungsflansche umfasst, die in Eingriffsstellung durch die Arretierungsvorsprünge hintergriffen werden.

Die EP 1 464 951 A2 betrifft eine Sicherungsvorrichtung zum Einbau einer Sonde in ein Behältnis für ein Messmedium, mit einer am Behältnis befestigbaren Armatur, die ein der Aufnahme, Halterung und Führung einer Sonde dienendes Sondenschutzrohr umfasst.

Es besteht daher die Aufgabe, eine Sondenhalterung der eingangs erwähnten Art zu schaffen, die die oben erwähnten Nachteile bestehender Sondenhalterungen überwindet.

Die dieser Erfindung zugrunde liegende Aufgabe kann durch die Merkmale aus Anspruch 1 gelöst werden. Insbesondere wird somit bei der eingangs beschriebenen Sondenhalterung erfindungsgemäß zur Lösung der Aufgabe vorgeschlagen, dass ein Arretierungselement relativ zu dem Zugangselement zwischen einer ersten Position und einer zweiten Position bewegbar angeordnet ist, wobei das Arretierungselement mit dem Halteelement derart zusammenwirkt, dass in der ersten Position ein die Befestigung fixierender Zustand und in der zweiten Position ein die Befestigung freigebenden Zustand definiert ist. In Gebrauchsstellung der Sondenhalterung an einer Wand eines Rohres ist daher vorgesehen, dass das Arretierungselement in der ersten Position vorliegt, so dass die erfindungsgemäße Sondenhalterung an der Wand fixierend befestigt ist. Zum Abnehmen der Sondenhalterung von der Wand ist vorgesehen, dass das Arretierungselement in die zweite Position bewegt wird, so dass die Fixierung der Befestigung gelöst wird.

Dies ermöglicht es, dass die erfindungsgemäße Sondenhalterung an einer Öffnung einer Wand, insbesondere eines Rohres, mittels des Zugangselements direkt ansetzbar ist und der erfindungsgemäße Aufbau der Sondenhalterung es ermöglicht, dass durch eine Verschiebung des Arretierungselements relativ zum Zugangselement die erfindungsgemäße Sondenhalterung an der Wand beziehungsweise der Öffnung einfach und sehr stabil befestigbar ist.

Des Weiteren kann es vorgesehen sein, dass die Sondenhalterung, insbesondere das Zugangselement, zumindest einen Teil eines Zugangskanals zur Aufnahme eines insbesondere stabförmigen Messinstruments ausbildet. Ein Zugangskanal kann dabei als eine Führung zum Einsetzen des insbesondere stabförmigen Messinstruments in Einsteckrichtung in die Zugangsöffnung dienen, insbesondere um eine falsche Handhabung beim Einstecken des Messinstruments zu verhindern und/oder um die korrekte Ausrichtung des Messinstruments vorzugeben. Ein besonders vorteilhafter, erfindungsgemäßer Aufbau der Sondenhalterung kann vorsehen, dass das Arretierungselement außerhalb eines oder des zuvor erwähnten Zugangskanals angeordnet ist. Somit ist das Arretierungselement auch bei eingesetzter Sonde von außen zur Betätigung leicht zugänglich, beispielsweise über eine Handhabe.

Bei einer Ausgestaltung der Erfindung kann vorgesehen sein, dass das Arretierungselement relativ zu dem Zugangselement entlang einer Einsatzrichtung der Zugangsöffnung zwischen der ersten Position und der zweiten Position bewegbar angeordnet ist. Somit ist eine platzsparende Betätigung, insbesondere in oder an einem die Zugangsöffnung definierenden Zugangskanal, ausführbar.

Günstig ist es, wenn das Zugangselement zum Ansetzen an eine Öffnung in einer Wand eines Rohres ausgebildet ist. Somit ist eine Untersuchung einer in dem Rohr befindlichen oder strömenden Substanz oder Probe mit einer in die Sondenhalterung eingesetzten Sonde einfach durchführbar.

Bei einer Ausgestaltung der Erfindung kann vorgesehen sein, dass mit dem Halteelement eine Klemmbewegung ausführbar ist. Somit ist ein sicherer Halt an der Öffnung herstellbar, ohne dass besondere Vorbereitungen an dieser Öffnung erforderlich wären. Besonders günstig ist es dabei, wenn die Klemmbewegung ein Aufspreizen oder ein Verengen bewirkt. Somit ist eine Ausformung der Öffnung, beispielsweise als Stutzen, für die Klemmhalterung nutzbar. Alternativ oder zusätzlich kann hierbei die Klemmbewegung durch die Bewegung des Arretierungselements erreichbar sein. Von Vorteil ist dabei, dass die Klemmbewegung einfach mit der Verstellung des Arretierelements ausführbar ist.

Um das Arretierungselement mittels einer einfachen und bequemen Handhabung relativ zum Zugangselement bewegen zu können, ist es vorgesehen, dass die erfindungsgemäße Sondenhalterung eine betätigbare Handhabe, beispielsweise die bereits erwähnte Handhabe, aufweist. Insbesondere kann vorgesehen sein, dass sie einen vorzugsweise seitlich in Bezug auf die Einsatzrichtung, insbesondere in Bezug auf die Verlaufsrichtung eines oder des Zugangskanals, betätigbaren Betätigungshebel aufweist. Ein Vorteil dieser Ausführung besteht beispielsweise darin, dass die Sondenhalterung mit nur einer Hand an einer Wand eines Rohres befestigbar ist. Bevorzugt ist der Betätigungshebel von einem Rückstellelement beaufschlagt, welches das Arretierungselement in einer fixierenden Position halten kann. Eine weitere Ausführungsform der Handhabe kann derart ausgebildet sein, dass die Handhabe als eine insbesondere um die Längsachse der Einsetzrichtung, vorzugsweise um die Längsachse eines oder des Zugangskanals, drehbar angeordnete Betätigungsschraube ausgebildet ist. Es kann zweckmäßig sein, wenn die Handhabe der erfindungsgemäßen Sondenhalterung zur insbesondere stufenlosen Überführung des Arretierungselements aus der ersten Position in die zweite Position ausgebildet ist. Weiter kann vorgesehen sein, dass das Arretierungselement gegen eine Rückstellkraft eines Rückstellelements aus der ersten Position in die zweite Position insbesondere stufenlos bewegbar ist. Ein weiterer Vorteil besteht insbesondere darin, dass die Krafteinwirkung, welche insbesondere durch das Halteelement und/oder das Arretierungselement, insbesondere durch einen oder mehrere Standfüße, auf die Wand einwirkt, mittels der Handhabe insbesondere stufenlos einstellbar ist. Dadurch kann festgelegt werden, wie stark die Fixierung der Befestigung sein soll.

Um die Stabilität der Befestigung weiter erhöhen zu können, kann vorgesehen sein, dass das Halteelement zum Einführen in eine oder die bereits zuvor erwähnte Öffnung, insbesondere zum Hintergreifen einer oder der bereits zuvor erwähnten Öffnung, ausgebildet ist. Besonders zweckmäßig kann es sein, wenn das Halteelement einen Haken aufweist, welcher insbesondere in einer Verlängerung einer Längsachse der Einsatzrichtung, insbesondere in einer Verlängerung einer Längsachse eines Zuführkanals, angeordnet ist. Beispielsweise kann das Halteelement einstückig an dem Zugangselement ausgebildet sein, was einfach zu fertigen ist.

Alternativ zur der zuvor erwähnten Ausgestaltung des Halteelements der erfindungsgemäßen Sondenhalterung kann zur erfindungsgemäßen Lösung der Aufgabe eine weitere Ausgestaltung des Halteelements vorgesehen sein, bei welcher das Halteelement zur vorzugsweise außenseitigen Befestigung der Sondenhalterung auf einem Rohrstutzen ausgebildet ist. Insbesondere kann sie derart ausgestaltet sein, dass das Halteelement in radialer Richtung in Bezug auf die Längsachse der Einsatzrichtung gegen eine Wand eines Rohres pressbar ausgebildet ist. Dabei kann vorgesehen sein, dass das Halteelement eine schräg ausgebildete Fläche, vorzugsweise eine an der Innenseite eines Gehäuses schräg ausgebildete Fläche, beaufschlagt, relativ zu welcher es, insbesondere zusammen mit dem Arretierungselement, bewegbar angeordnet ist. Vorzugsweise ist das Halteelement gelenkig mit dem Arretierungselement verbunden, insbesondere derart, dass das Halteelement um einen Drehpunkt beweglich angeordnet ist. Es kann weiter bevorzugt sein, dass das Halteelement bei einer Relativbewegung, insbesondere zusammen mit dem Arretierungselement, hin zur schrägen Fläche durch diese in Richtung der Wand eines Rohres abgelenkt wird und/oder dass es in der ersten Position einen kleineren Innendurchmesser in Bezug auf die Längsachse der Einsatzrichtung definiert als in der zweiten Position.

Es kann zweckmäßig sein, wenn die erfindungsgemäße Sondenhalterung mehrere, insbesondere unterschiedlich ausgebildete Haltelemente aufweist. Beispielsweise ist eine erfindungsgemäße Ausführungsform denkbar, welche die beiden zuvor beschriebenen Ausgestaltungen an Halteelementen umfasst. Dies hat den Vorteil, dass mittels einer solchen Ausführungsform der erfindungsgemäßen Sondenhalterung eine Befestigung an verschiedenartig ausgebildeten Öffnungen in einer Wand eines Rohres möglich ist, zum Beispiel an einer Öffnung in einer Seitenwand eines Rohres und an einer Öffnung einer Wand eines Rohrstutzens.

Weiter kann vorgesehen sein, dass das Arretierungselement und/oder ein Gehäuse, beispielsweise das bereits erwähnte Gehäuse, wenigstens einen Standfuß, insbesondere wenigstens zwei, vorzugsweise drei, Standfüße, aufweist, der/die seitlich versetzt zur Zugangsöffnung angeordnet ist/sind, um die erfindungsgemäße Sondenhalterung an einer oder der Wand eines Rohres abstützen zu können. Eine besonders gut austarierte Abstützung, bei welcher die Kräfte auf die einzelnen Standfüße sehr gleichmäßig verteilt sind, kann dadurch erzielt werden, wenn das Arretierungselement wenigstens zwei Standfüße, insbesondere wenigstens drei Standfüße aufweist.

Ein einfacher und gleichzeitig robuster Aufbau der erfindungsgemäßen Sondenhalterung kann vorsehen, dass das Arretierungselement mittels eines Gewindes und eines dazu passenden Gegengewindes relativ zu dem Zugangselement bewegbar angeordnet ist. Es kann weiter bevorzugt sein, dass das Halteelement und das Arretierungselement zwischen sich einen insbesondere variablen Abstand definieren. Dabei kann es zweckmäßig sein, wenn der Abstand zwischen dem Halteelement und dem Arretierungselement in der zweiten Position des Arretierungselements breiter oder mindestens so breit wie die Stärke der Wand des einen Rohres ist und/oder wenn der Abstand zwischen dem Halteelement und dem Arretierungselement in der ersten Position des Arretierungselements kleiner oder gleich der Stärke der Wand des einen Rohres ist. Dies ist besonders günstig bei einer Befestigung an einer dünnen Wand eines Rohres.

Es kann vorgesehen sein, dass das Zugangselement und das Halteelement miteinander verbunden sind. Das Zugangselement und das Halteelement können auch einstückig ausgebildet sein. Um das Halteelement beispielsweise tauschen zu können, kann es zweckmäßig sein, wenn das Halteelement vom Zugangselement abnehmbar ausgebildet ist. Dies hat den Vorteil, dass unterschiedliche Halteelemente mit einer Sondenhalterung eingesetzt werden können.

Um das insbesondere stabförmige Messinstrument mittels der erfindungsgemäßen Sondenhalterung, insbesondere innerhalb eines, beispielsweise des zuvor bereits erwähnten, Zuführkanals fixieren zu können, kann vorgesehen sein, dass die erfindungsgemäße Sondenhalterung ein Klemmelement zur axialen Fixierung eines in die Zugangsöffnung eingesetzten, insbesondere stabförmigen Messinstruments aufweist. Insbesondere kann vorgesehen sein, dass das Klemmelement an einem proximalen Ende der Zuführöffnung, insbesondere an einem proximalen Ende eines, beispielsweise des zuvor bereits erwähnten, Zuführkanals, eingerichtet ist.

Zur Abdichtung eines Spalts beispielsweise zwischen der Öffnung und dem Zugangselement, kann es vorteilhaft sein, wenn die erfindungsgemäße Sondenhalterung ein Dichtelement aufweist. Es kann vorgesehen sein, dass es sich um ein ringförmiges Dichtelement handelt. Um eine möglichst platzsparende und kompakte Bauweise der erfindungsgemäßen Sondenhalterung zu schaffen, welche eine gute Abdichtung ermöglicht, kann es zweckmäßig sein, wenn das Dichtelement an der Zugangsöffnung und/oder an der Außenseite des Zugangselementes angeordnet ist. Des Weiteren kann vorgesehen sein, dass das Dichtelement an der Außenseite eines oder des Zugangskanals angeordnet ist. Es kann weiter bevorzugt sein, wenn das Dichtelement aus einem elastischen Material, vorzugsweise aus einem Elastomer, beispielsweise aus Gummi, hergestellt ist. Es kann als Manschette und/oder als Dichtlippe, insbesondere in konischer und/oder zylinderstumpfförmiger Form, ausgebildet sein. Dies ermöglicht eine relativ gute Abdichtung des Spalts, so dass kein Fluid entweichen kann und/oder unverfälschte Messungen mittels des Messinstruments durchführbar sind.

Bei der erfindungsgemäßen Sondenhalterung ist vorgesehen, dass die Sondenhalterung derart eingerichtet ist, dass durch die Relativbewegung des Arretierungselements hin zu dem Zugangselement eine Kraft, insbesondere eine Spann- und/oder Klemmkraft, über das Halteelement auf eine, beispielsweise die bereits erwähnte, Wand eines Rohres einwirkt und die Sondenhalterung so an dieser Wand befestigbar ist. Durch das Zusammenwirken von Arretierungselement und Zugangselement wird eine Kraft erzeugt, wobei insbesondere durch ein oder das zuvor genannte Halteelement, welches gegen die Wand pressbar ist und/oder durch das Arretierungselement, insbesondere durch wenigstens einen Standfuß des Arretierungselements, welches/welcher gegen die Wand pressbar ist, eine Kraft erzeugt wird, die auf die Wand, insbesondere auf die Innenseite und/oder die Außenseite der Wand wirkt.

Darüber hinaus betrifft die Erfindung ein Verfahren zur Befestigung eines insbesondere stabförmigen Messinstruments an einer Öffnung einer Wand eines Rohres, wobei ein Zugangselement über der Öffnung derart angeordnet wird, dass eine Zugangsöffnung auf die Öffnung ausgerichtet ist, und wobei das insbesondere stabförmige Messinstrument in die Zugangsöffnung eingeführt und fixiert wird. Das Messinstrument kann hierbei eine stabförmige Sonde aufweisen und/oder einen stabförmigen Messstrahl durch die Zugangsöffnung senden.

Hinsichtlich des erfindungsgemäßen Verfahrens besteht die zuvor genannte Aufgabe und insbesondere die Aufgabe, ein Verfahren der erwähnten Art zu schaffen, bei welchem eine Sondenhalterung der eingangs erwähnten Art eingesetzt wird, mittels welchem die eingangs erwähnten Nachteile beim Befestigen an einer Öffnung einer Wand eines Rohres überwunden werden.

Die dieser Erfindung zugrunde liegende Aufgabe kann durch die Merkmale aus Anspruch 13 gelöst werden. Insbesondere wird somit bei dem erfindungsgemäßen Verfahren zur Lösung der Aufgabe vorgeschlagen, dass das Zugangselement an der Öffnung durch eine vorzugsweise mit einer Schraubbewegung angetriebe nen Positionsveränderung eines Arretierungselements, insbesondere entlang einer Einsatzrichtung der Zugangsöffnung mittels eines Halteelementes festgeklemmt wird.

Nachstehend sind mehrere Ausführungsformen der Erfindung anhand der Zeichnungen näher beschrieben. Es zeigt in schematischer Darstellung:
- Fig. 1A-C: eine perspektivische Darstellung aus verschiedenen Blickwinkeln eines ersten erfindungsgemäßen Ausführungsbeispiels der erfindungsgemäßen Sondenhalterung, wobei die Abbildung der Sondenhalterung gemäß Fig. 1A teilweise als Schnittansicht dargestellt ist,
- Fig. 2A: eine Schnittansicht der Ausführungsform gemäß Fig. 1A-C, wobei ein Arretierungselement in einem zweiten, die Befestigung freigebenden Zustand vorliegt,
- Fig. 2B: eine Schnittansicht der Ausführungsform gemäß Fig. 1A-C, wobei ein Arretierungselement in einem ersten, die Befestigung fixierenden Zustand vorliegt,
- Fig. 3A-C: eine perspektivische Darstellung aus verschiedenen Blickwinkeln eines zweiten erfindungsgemäßen Ausführungsbeispiels der erfindungsgemäßen Sondenhalterung, wobei die Abbildung der Sondenhalterung gemäß Fig. 3A teilweise als Schnittansicht dargestellt ist,
- Fig. 4A: eine Schnittansicht der Ausführungsform gemäß Fig. 3A-C, wobei ein Arretierungselement in einem zweiten, die Befestigung freigebenden Zustand vorliegt,
- Fig. 4B: eine Schnittansicht der Ausführungsform gemäß Fig. 3A-C, wobei ein Arretierungselement in einem ersten, die Befestigung fixierenden Zustand vorliegt,
- Fig. 5A-B: eine perspektivische Darstellung aus verschiedenen Blickwinkeln eines dritten erfindungsgemäßen Ausführungsbeispiels der erfindungsgemäßen Sondenhalterung, wobei die Abbildung der Sondenhalterung gemäß Fig. 5A teilweise als Schnittansicht dargestellt ist,
- Fig. 6A: eine Schnittansicht der Ausführungsform gemäß Fig. 5A-B, wobei ein Arretierungselement in einem zweiten, die Befestigung freigebenden Zustand vorliegt,
- Fig. 6B: eine Schnittansicht der Ausführungsform gemäß Fig. 5A-B, wobei ein Arretierungselement in einem ersten, die Befestigung fixierenden Zustand vorliegt,
- Fig. 7A-C: eine perspektivische Darstellung aus verschiedenen Blickwinkeln eines vierten erfindungsgemäßen Ausführungsbeispiels der erfindungsgemäßen Sondenhalterung, wobei die Abbildung der Sondenhalterung gemäß Fig. 7A teilweise als Schnittansicht dargestellt ist,
- Fig. 8A: eine Schnittansicht der Ausführungsform gemäß Fig. 7A-C, wobei ein Arretierungselement in einem zweiten, die Befestigung freigebenden Zustand vorliegt,
- Fig. 8B: eine Schnittansicht der Ausführungsform gemäß Fig. 7A-C, wobei ein Arretierungselement nach einer ersten Möglichkeit zur Befestigung in einem ersten, die Befestigung fixierenden Zustand vorliegt,
- Fig. 8C: eine Schnittansicht der Ausführungsform gemäß Fig. 7A-C, wobei ein Arretierungselement nach einer zweiten Möglichkeit zur Befestigung in einem ersten, die Befestigung fixierenden Zustand vorliegt.

Im Folgenden wird die Erfindung anhand von Beispielen erläutert, bei denen die Sondenhalterung an einer Rohröffnung einer Rohrwand gehalten ist. Bei weiteren Ausführungsbeispielen ist die Sondenhalterung an einer Öffnung gehalten, die in einer Wand ausgebildet ist, die nicht zu einem Rohr gehört.

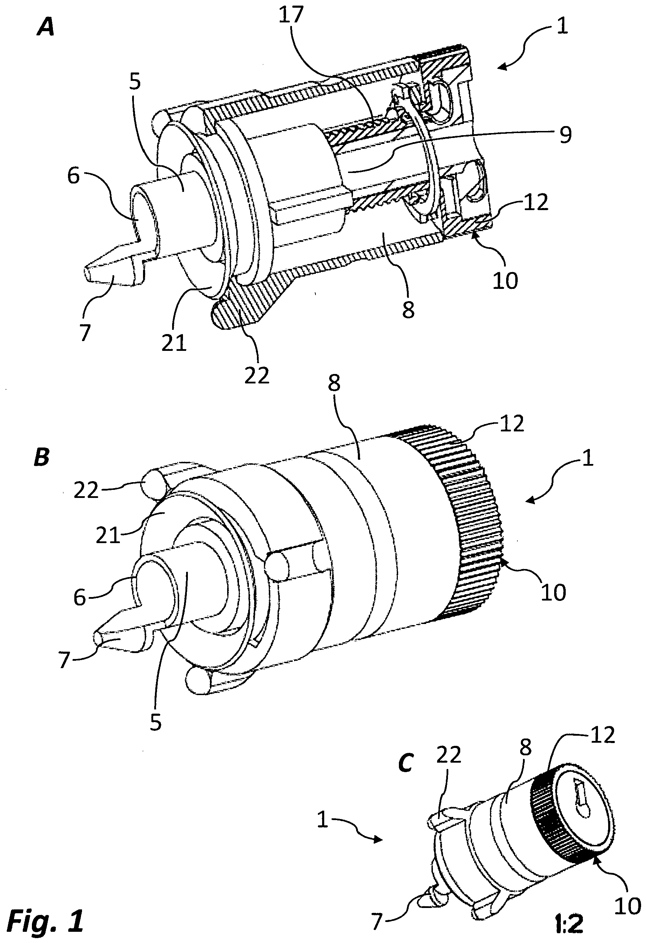

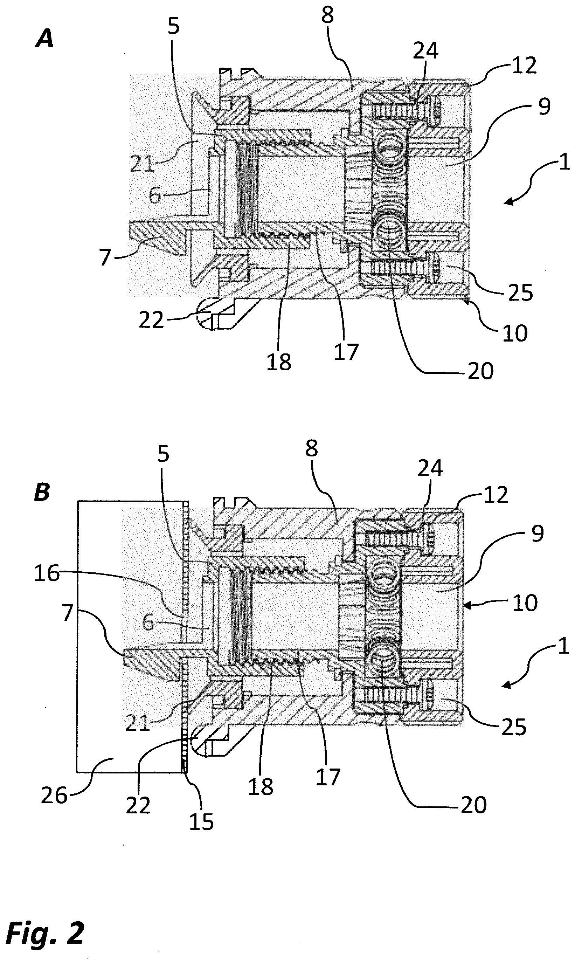

In den Figuren 1 und 2 ist eine erste, spezifische und im Ganzen als 1 bezeichnete Ausführungsform der erfindungsgemäßen Sondenhalterung abgebildet.

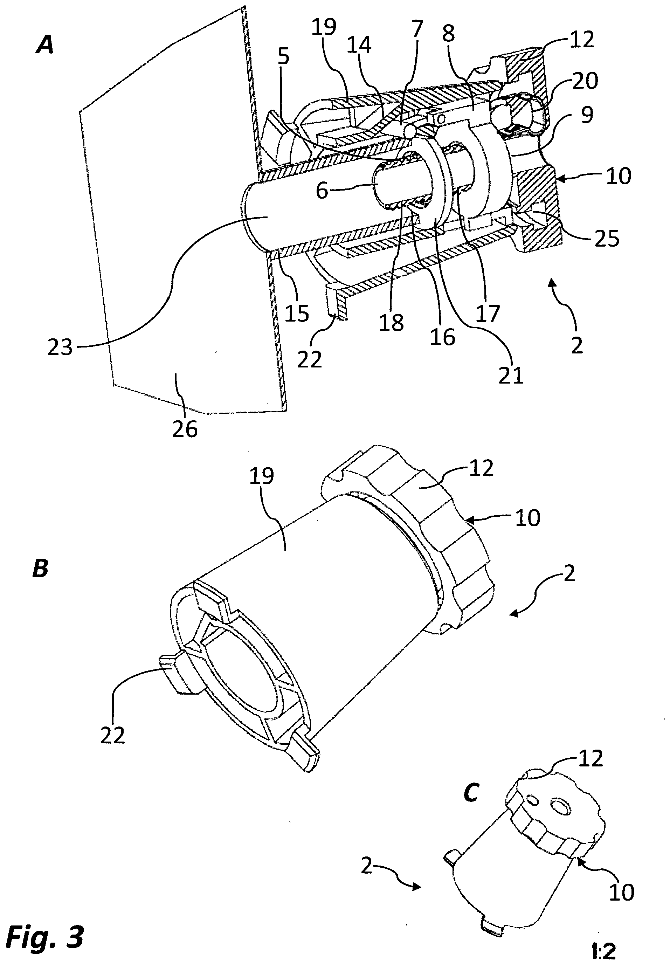

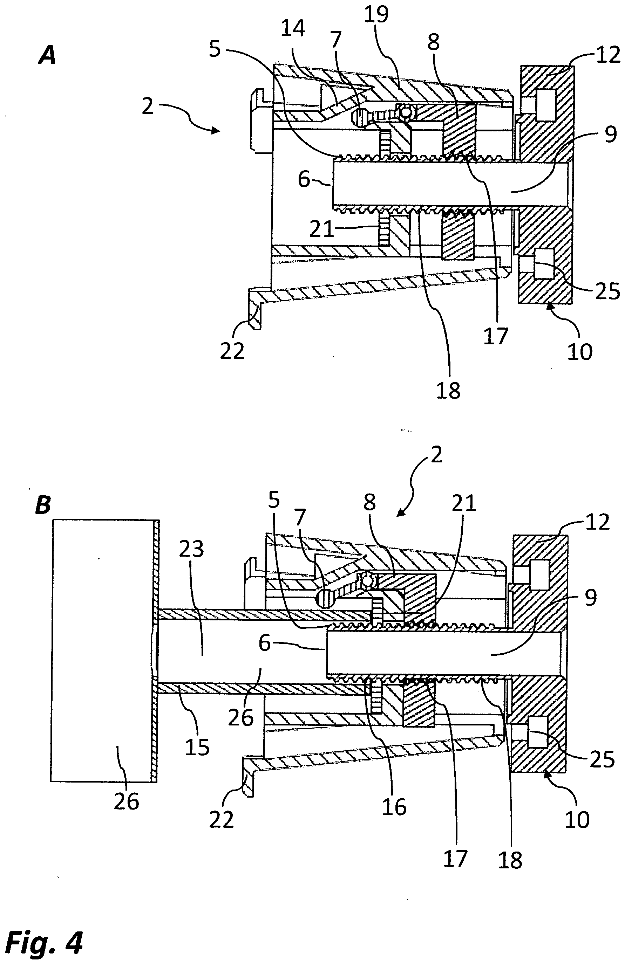

In den Figuren 3 und 4 ist eine zweite, spezifische und im Ganzen als 2 bezeichnete Ausführungsform der erfindungsgemäßen Sondenhalterung abgebildet.

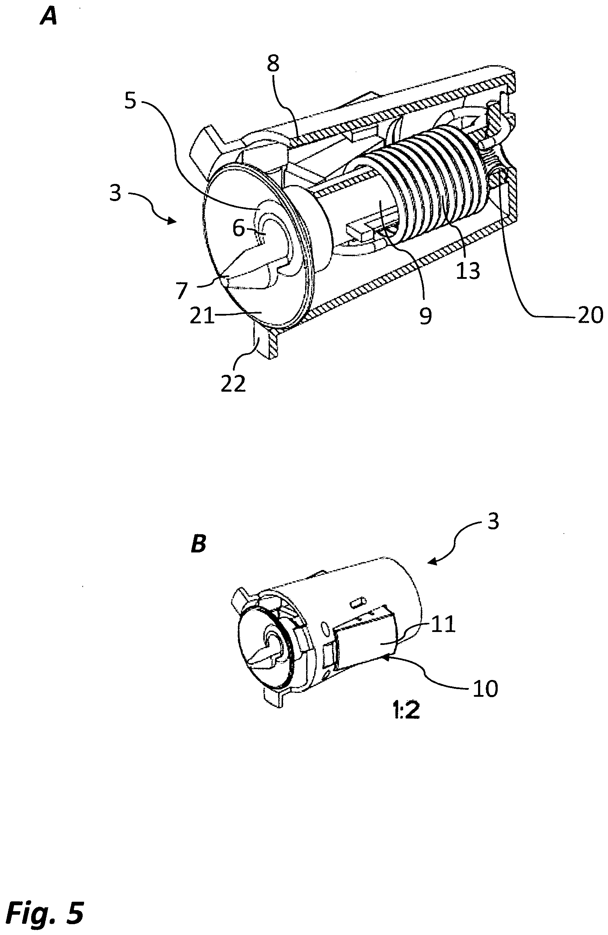

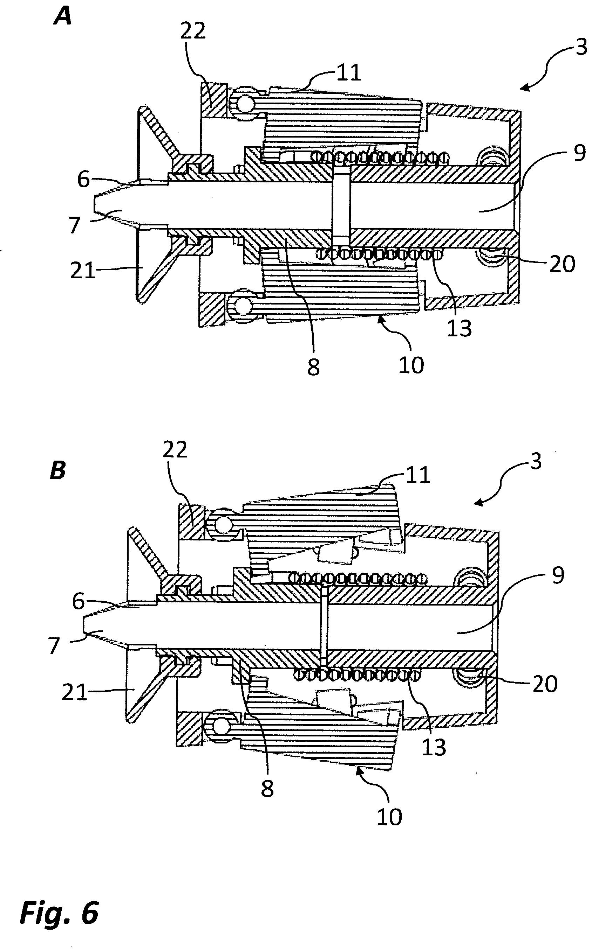

In den Figuren 5 und 6 ist eine dritte, spezifische und im Ganzen als 3 bezeichnete Ausführungsform der erfindungsgemäßen Sondenhalterung abgebildet.

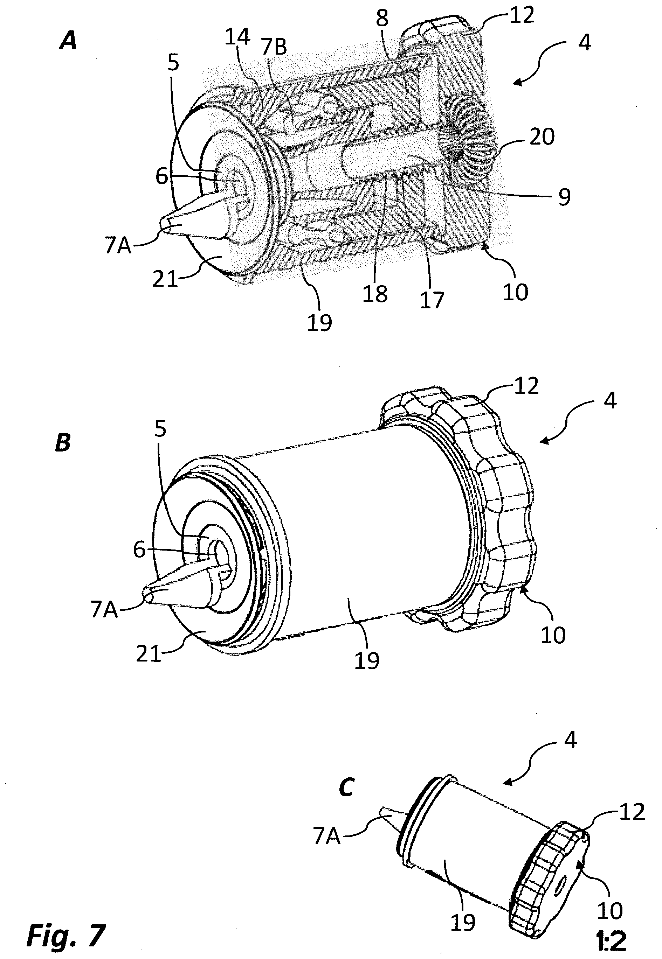

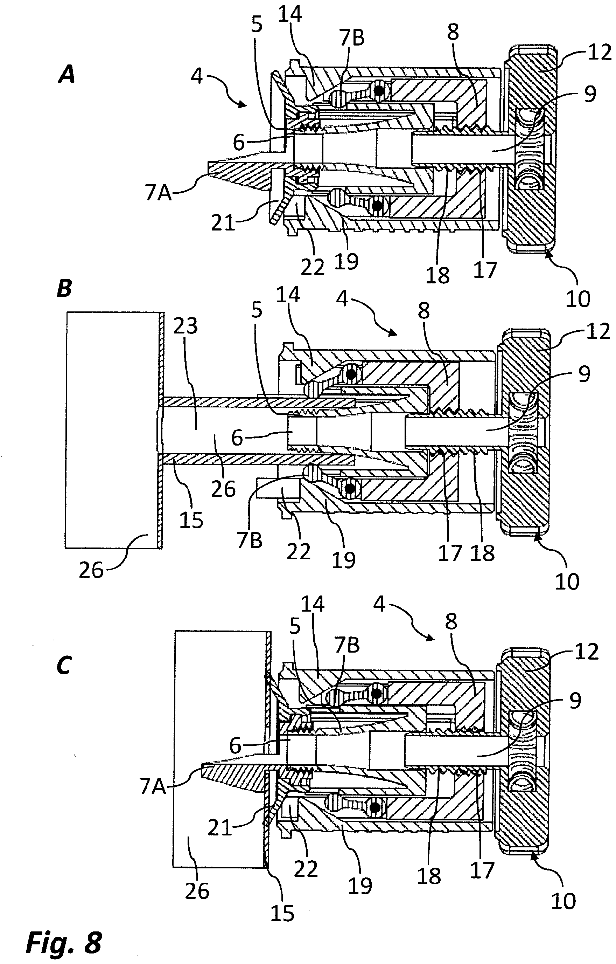

In den Figuren 7 und 8 ist eine vierte, spezifische und im Ganzen als 4 bezeichnete Ausführungsform der erfindungsgemäßen Sondenhalterung abgebildet.

Die erfindungsgemäßen Sondenhalterungen 1, 2, 3, 4 weisen alle ein an eine Öffnung in einer Wand eines Rohres ansetzbares Zugangselement 5 auf, welches zumindest einen Teil einer durchgehenden Zugangsöffnung 6 aufweist. Die Zugangsöffnung 6 dient zur Aufnahme und zum Einsetzen eines insbesondere stabförmigen Messinstruments (nicht dargestellt). Es ist also vorgesehen, dass das Messinstrument durch die Zugangsöffnung 6 eingesetzt und entlang eines Zugangskanal 9 in eine Öffnung in einer Wand eines Rohres eingeführt werden kann, so dass zumindest ein Teil des Messinstruments durch die Öffnung ins Innere des Rohres ragt. Alternativ kann ein Messinstrument eingesetzt werden, welches einen Messstrahl durch die Zugangsöffnung 6 in das Rohr 26 schickt.

Zur Befestigung der erfindungsgemäßen Sondenhalterung 1, 2, 3, 4 an einer Wand 15 eines Rohres 26 ist bei einer Ausführungsform gemäß einer der Figuren 1 bis 8 vorgesehen, dass ein Arretierungselement 8 relativ zu dem Zugangselement 5 entlang einer Einsatzrichtung der Zugangsöffnung 6 zwischen einer ersten Position und einer zweiten Position bewegbar angeordnet ist. Weiter ist vorgesehen, dass das Arretierungselement 8 mit dem Zugangselement 5, insbesondere mit einem Halteelement 7, 7A, 7B, welches zur Befestigung der Sondenhalterung 1, 2, 3, 4 an einer oder der erwähnten Wand 15 eines Rohres 26 ausgebildet ist, derart zusammenwirkt, dass in der ersten Position des Arretierungselements 8 ein die Befestigung fixierender Zustand und in der zweiten Position ein die Befestigung freigebenden Zustand definiert ist. Ist die erfindungsgemäße Sondenhalterung 1, 2, 3, 4 also in Gebrauchsstellung an eine Wand 15 angesetzt und befindet sich das Arretierungselement 8 in der ersten Position, wie es in den Figuren 2B, 4B, 6B, 7B sowie 7C gezeigt ist, so wird die erfindungsgemäße Sondenhalterung 1, 2, 3, 4 an der Wand 15 durch ein Zusammenwirken des Haltelements 7, 7A, 7B und des Arretierungselements 8 fixierend befestigt. Hierbei führt das Halteelement 7 (ggf. mit weiteren, nicht dargestellten Halteelementen) eine Klemmbewegung aus, die beispielsweise in den Figuren 4, 5 und 7 in einer Verengung eines lichten Innendurchmessers besteht, durch welche die Sondenhalterung 1 auf einem Rohrstutzen 23 fixierbar ist. Bei weiteren Ausführungsbeispielen wird diese Klemmbewegung durch ein Aufspreizen in einem Rohrstutzen 23 oder hinter einer Rohröffnung 16 erreicht.

Wird das Arretierungselement 8, wie es in den Figuren 2A, 4A, 6A und 8A gezeigt ist, in die zweite Position bewegt, so wird die Befestigung freigegeben, so dass die erfindungsgemäße Sondenhalterung 1, 2, 3, 4 von der Wand 15 entfernt werden kann.

Das Zugangselement 5 bildet, wie es in den Figuren 1A, 2A, 2B, 3A, 4A, 4B, 5A, 6A, 6B, 7A sowie 8A-C gezeigt ist, zumindest einen Teil eines Zugangskanals 9 zur Aufnahme eines insbesondere stabförmigen Messinstruments aus. Das Arretierungselement 8 ist jeweils außerhalb des Zugangskanals 9 angeordnet.

Um das Arretierungselement 8 von der ersten in die zweite beziehungsweise von der zweiten in die erste Position bewegen zu können, weist die Sondenhalterung 1, 2, 3, 4 eine manuell betätigbare Handhabe 10, 11, 12 auf. Durch Betätigen der Handhabe 10, 11, 12 kann das Arretierungselement 8 vorzugsweise stufenlos zwischen der ersten und der zweiten Position durch translationale Umsetzung bewegt werden.

Bei der in den Figuren 5 und 6 dargestellten Ausführungsformen der erfindungsgemäßen Sondenhalterung 3 ist die Handhabe 10 als ein seitlich in Bezug auf die Einsatzrichtung, insbesondere in Bezug auf die Verlaufsrichtung des Zugangskanals 9, betätigbarer Betätigungshebel 11 ausgebildet. In Figur 6B ist dargestellt wie das Arretierungselement 8 der erfindungsgemäßen Sondenhalterung 3 in der ersten Position vorliegt, so dass die erfindungsgemäße Sondenhalterung 3 in Gebrauchsstellung an der Wand 15 eines Rohres 26 befestigt und die Befestigung fixiert ist. Dabei spreizen sich die beiden Flügel des Bestätigungshebels 11 in radialer Richtung in Bezug zur Längsachse des Zugangskanals 9 nach außen ab. Durch das Zusammenwirken des Halteelements 7 und des Arretierungselements 8, insbesondere der Standfüße 22 des Arretierungselements 8, wirkt eine Klemmkraft auf die Wand 15, insbesondere auf die Außenseite der Wand 15, durch welche die Sondenhalterung fixierend befestigt ist. Das Rückstellelement 13, welches bei dieser spezifischen Ausführungsform als Rückstellfeder ausgebildet ist, zieht das Arretierungselement 8 dabei in die erste oder fixierende Position, wenn der Betätigungshebel 11 nicht betätigt wird, wobei der Abstand zwischen Arretierungselement 8 und Zugangselement 5 sowie der Abstand zwischen Arretierungselement 8 und Halteelement 7 in der ersten Position, wie in Figur 6 B gezeigt ist, geringer ist, als der Abstand in der zweiten Position, wie es in Figur 6A gezeigt ist. Um das Arretierungselement 8 in die zweite Position zu bewegen und die Befestigung freizugeben, ist es möglich, den Betätigungshebel 11 in Bezug auf die Verlaufsrichtung des Zugangskanals 9 in radialer Richtung hin zum Zugangskanal 9 zu bewegen, indem der Betätigungshebel 11 beispielsweise durch nur eine Hand, insbesondere durch Zusammendrücken betätigt werden kann. Dabei vergrößert sich der Abstand zwischen Arretierungselement 8 und Zugangselement 5 beziehungsweise zwischen Arretierungselement 8 und Haltelement 7, so dass zwischen Halteelement 7 und den Standfüßen 22 keine Klemmkraft mehr entsteht, die auf die Wand 15 eines Rohres 26 wirkt.

Bei den in den Figuren 1, 2, 3, 4, 7 und 8 dargestellten Ausführungsformen der erfindungsgemäßen Sondenhalterung 1, 2, 4 ist die Handhabe 10 als eine drehbare Betätigungsschraube 12 ausgebildet. Die Bestätigungsschraube 12 ist dabei um die Längsachse des Zugangskanals 9 drehbar angeordnet, wobei sie eine Schraubenführung 25 aufweist, in welcher eine Schraube 24 geführt ist. Durch Drehen der Betätigungsschraube 12 kann das Arretierungselement 8 zwischen einer ersten Position, wie es in den Figuren 2B, 4B, 8B und 8C dargestellt ist, in welcher die erfindungsgemäße Sondenhalterung 1, 2, 4 an der Wand 15 eines Rohres 26 im fixierten befestigten Zustand vorliegt, und einer zweiten Position, wie es in den Figuren 2A, 4A und 8A dargestellt ist, in welcher die erfindungsgemäße Sondenhalterung 1, 2, 4 in einem die Befestigung freigebenden Zustand vorliegt, stufenlos überführt werden.

Das Arretierungselement 8 der Ausführungsformen der erfindungsgemäßen Sondenhalterung 1, 2 und 4 weist ein Gewinde 17, insbesondere ein Innengewinde (vgl. die erfindungsgemäße Sondenhalterung 1 und 4) oder ein Außengewinde (vgl. die erfindungsgemäße Sondenhalterung 3) auf, welches in ein passendes Gegengewinde 18, insbesondere ein Außengewinde oder ein Innengewinde, eingeschraubt oder einschraubbar ist, wobei durch Betätigung der Betätigungsschraube 12 das Gewinde 17 des Arretierungselements 8 in das Gegengewinde 18 eingeschraubt oder herausgeschraubt werden kann. Das Arretierungselement 8 bewegt sich durch die Drehung der Betätigungsschraube 12 in axialer Richtung entlang der Längsachse des Zugangskanals 9 und setzt dabei die rotatorische Bewegung der Betätigungsschraube 12 in eine translatorische Bewegung um.

Liegt das Arretierungselement 8 in einer ersten Position vor, so ist die erfindungsgemäße Sondenhalterung 1, 2, 4 in Gebrauchsstellung an der Wand 15 eines Rohres 26 fixierend befestigt. Dabei ist der Abstand zwischen dem Arretierungselement 8 und dem Zugangselement 5 geringer, als wenn das Arretierungselement 8 relativ zu dem Zugangselement 5 in axialer Richtung entlang des Zugangskanals 9 in eine zweite Position bewegt wurde, in der der Abstand zwischen dem Arretierungselement 8 und dem Zugangselement 5 größer ist.

Die erfindungsgemäße Sondenhalterung 1, 3 und 4 weist ein als Haken ausgebildetes Halteelement 7, 7A zum Einführen in eine oder die Öffnung 16 auf, welches die Öffnung 16 hintergreift und mit einer der Wand zugewandten Fläche an die Innenseite der Wand 15 anlegbar ist. Das Haltelement 7, 7A ist derart ausgebildet, dass es mit dem Zugangselement 5 verbunden ist und vom Zugangselement 5 abnehmbar ist. Fig. 8B zeigt die Sondenhalterung 4 mit abgenommenen Halteelement 7A. Dies ermöglicht es, das Haltelement 7, 7A bei Bedarf zu tauschen. Das Arretierungselement 8 umfasst drei Standfüße 22, welche seitlich versetzt zur Zugangsöffnung 6 angeordnet sind und an der Außenseite der Wand 15 ansetzbar sind. Durch Drehen der Betätigungsschraube 12 kann der Abstand zwischen den Standfüßen 22 des Arretierungselements 8 und dem Haken am Zugangselement 5 derart stufenlos verringert werden, dass durch das Zusammenwirken eine Kraft, insbesondere eine Klemm- und/oder Spannkraft, erzeugt wird, welche insbesondere auf die Innenseite der Wand durch den Haken und auf die Außenseite der Wand 15 durch die Standfüße 22 wirkt und die erfindungsgemäße Sondenhalterung 1 und 4 an der Wand 15 fixierend befestigt.

Die erfindungsgemäße Sondenhalterung 2, 4 ist zur außenseitigen Befestigung auf einem Rohrstutzen 23 ausgebildet. Das Halteelement 7, 7B ist dabei derart ausgebildet, dass das Halteelement 7, 7B insbesondere in radialer Richtung in Bezug auf die Längsachse des Zugangskanals 9 gegen eine Wand 15 eines Rohres 26 pressbar ist. Das Halteelement 7, 7B beaufschlagt eine schräg ausgebildete Fläche 14, vorzugsweise eine an der Innenseite eines Gehäuses 19 schräg ausgebildete Fläche 14, relativ zu welcher es bewegbar angeordnet ist. Bei einer Relativbewegung hin zur schrägen Fläche 14 wird es durch diese in Richtung der Wand 15 abgelenkt, so dass es in der ersten Position einen kleineren Innendurchmesser definiert als in der zweiten Position. In den dargestellten Ausführungsformen der erfindungsgemäße Sondenhalterung 2, 4 ist das Arretierungselement 8 mit dem Halteelement 7, 7B, insbesondere in radialer Richtung in Bezug auf die Längsachse des Zugangskanals 9, um einen Drehpunkt gelenkig verbunden, wobei das Halteelement 7, 7B durch Bewegen des Arretierungselement 8 zusammen mit diesem entlang der Längsachse des Zugangskanals 9 bewegbar ist.

Die Ausführungsform der erfindungsgemäßen Sondenhalterung 4 umfasst mehrere Halteelemente 7A, 7B. Dies hat den Vorteil, dass die erfindungsgemäße Sondenhalterung 4 derart ausgebildet ist, dass sie universell einsetzbar ist, um sie beispielsweise direkt an einer Wand 15 eines Rohres 26 oder an einem Rohrstutzen 23 befestigen zu können.

Um das insbesondere stabförmig ausgebildete Messinstrument innerhalb des Zugangkanals 9 der erfindungsgemäßen Sondenhalterung 1, 2, 3, 4 fixieren zu können, hat diese ein Klemmelement 20 zur axialen Fixierung. Das Klemmelement 20 kann als geschweißter Federring, Blattfeder, Federkorb oder Ähnliches ausgebildet sein, um das Messinstrument in seiner gewünschten Position innerhalb des Zugangskanals zu fixieren. In den Figuren 1, 2, 5, 6, 7 und 8 ist das Klemmelement 20 als Federring ausgebildet. In Figur 3A ist das Klemmelement 20 als Blattfeder ausgeformt.

Damit durch die Öffnung 16 der Wand 15, während die erfindungsgemäße Sondenhalterung 1, 2, 3, 4 in Gebrauchsstellung am Rohr 23 fixierend befestigt ist (in welcher das Arretierungselement 8 in der ersten Position vorliegt), aus dem Inneren des Rohres kein Fluid, insbesondere keine Flüssigkeit und/oder Gas entweicht, weist die erfindungsgemäße Sondenhalterung 1, 2, 3, 4 ein Dichtelement 21 auf. Vorzugsweise ist das Dichtelement 21 ringförmig ausgebildet und/oder in der Form der Öffnung 16 an einem distalen Ende (in Bezug auf einen Benutzer) der Zuführöffnung 6, insbesondere an einem distalen Ende eines oder des Zuführkanals 9. Das Dichtelement 21 dient zum Abdichten eines Spalts zwischen der Öffnung 16 und dem Zugangselement 5. Es ist an der Außenseite des Zugangselementes 5, insbesondere in Verlängerung des Zugangskanals 9, angeordnet.

Das Dichtelement 21 der erfindungsgemäßen Sondenhalterung 1, 3, 4 ist vorzugsweise als Manschette oder Dichtlippe aus einem insbesondere elastischen Material, vorzugsweise aus einem Elastomer, ausgebildet. Es kann vorgesehen sein, dass das Dichtelement 21 konisch und/oder kegelstumpfförmig ausgebildet ist.

Das Dichtelement 21 der erfindungsgemäßen Sondenhalterung 2 ist als Dichtungsring ausgebildet, welches an der Außenseite des Zugangskanals 9 angeordnet ist. Der Dichtungsring beaufschlagt in Gebrauchsstellung der erfindungsgemäßen Sondenhalterung 2 eine Stirnseite des Rohrstutzens 23 und dichtet einen Spalt zwischen der Öffnung 16 und dem Zugangselement 5 ab. Der Dichtungsring kann aus einem elastischen Material, insbesondere aus einem Elastomer, hergestellt sein.

Die erfindungsgemäße Sondenhalterung 1, 2, 3, 4 ist derart eingerichtet, dass durch die Relativbewegung des Arretierungselements 8 hin zu dem Zugangselement 5 eine Kraft, insbesondere eine Spann- und/oder Klemmkraft, zumindest über das Halteelement 7, 7A, 7B auf eine oder die Wand 15 eines Rohres 26 einwirkt und die Sondenhalterung 1, 2, 3, 4 an einer oder der Wand 15 fixierend befestigt. Durch den erfindungsgemäßen Aufbau ist es möglich, die Sondenhalterung 1, 2, 3, 4 schnell und einfach fixierend an der Öffnung 16 am Rohr 23 zu befestigen. Ferner weist diese im Vergleich zu vorbekannten Lösungen eine sehr hohe Fixierungsstabilität auf, so dass Störungen der durch das Messinstrument vorgenommenen Messungen vermeidbar sind.

### Bezugszeichenliste

- 1: Sondenhalterung
- 2: Sondenhalterung
- 3: Sondenhalterung
- 4: Sondenhalterung
- 5: Zugangselement
- 6: Zugangsöffnung
- 7: Halteelement
- 8: Arretierungselement
- 9: Zugangskanal
- 10: Handhabe
- 11: Betätigungshebel
- 12: Betätigungsschraube
- 13: Rückstellelement
- 14: schräge Fläche
- 15: (Rohr-)wand
- 16: (Rohr-)öffnung
- 17: Gewinde
- 18: Gegengewinde
- 19: Gehäuse
- 20: Klemmelement
- 21: Dichtelement
- 22: Standfuß
- 23: Rohrstutzen
- 24: Schraube
- 25: Schraubenführung
- 26: Rohr

## Patentansprüche

1. Sondenhalterung (1, 2, 3, 4) für ein Messinstrument zur Messung eines Messwertes eines durch ein Rohr (26) strömenden Fluids, mit einem an eine Öffnung (16) in einer Wand (15) ansetzbaren Zugangselement (5), wobei das Zugangselement (5) zumindest einen Teil einer durchgehenden Zugangsöffnung (6) aufweist, welche zum Einsetzen des Messinstruments in die Öffnung (16) ausgebildet ist, und mit einem Halteelement (7, 7A, 7B), welches zur Befestigung der Sondenhalterung (1, 2, 3, 4) an der Wand (15) des Rohres (26) ausgebildet ist, **dadurch gekennzeichnet, dass** ein Arretierungselement (8) mittels einer betätigbaren Handhabe (10, 11, 12) relativ zu dem Zugangselement (5) zwischen einer ersten Position und einer zweiten Position bewegbar angeordnet ist, wobei das Arretierungselement (8) mit dem Halteelement (7, 7A, 7B) derart zusammenwirkt, dass in der ersten Position ein die Befestigung fixierender Zustand und in der zweiten Position ein die Befestigung freigebenden Zustand definiert ist, dass durch die Relativbewegung des Arretierungselements (8) hin zu dem Zugangselement (5) eine Kraft über das Halteelement (7, 7A, 7B) auf die Wand (15) des Rohres (26) einwirkt und die Sondenhalterung (1, 2, 3, 4) an der Wand (15) fixierend befestigt, dass das Zugangselement (5) zumindest einen Teil eines Zugangskanals (9) zur Aufnahme des Messinstruments ausbildet, dass das Arretierungselement (8) außerhalb des Zugangskanals (9) angeordnet ist, und dass das Arretierungselement (8) relativ zu dem Zugangselement (5) entlang einer Einsatzrichtung der Zugangsöffnung (6) entlang einer Längsachse des Zugangskanals (9) zwischen der ersten Position und der zweiten Position bewegbar angeordnet ist, wobei die Handhabe (10, 11, 12) bei eingesetztem Messinstrument von außerhalb des Rohres (26) zur Betätigung zugänglich ist.

2. Sondenhalterung (1, 2, 3, 4) nach Anspruch 1, **dadurch gekennzeichnet, dass** das Zugangselement (5) zum Ansetzen an eine Öffnung (16) in der Wand (15) des Rohres (26) ausgebildet ist.

3. Sondenhalterung (1, 2, 3, 4) nach einem der vorstehenden Ansprüche, **dadurch gekennzeichnet, dass** mit dem Halteelememt (7, 7A, 7B) eine Klemmbewegung ausführbar ist, insbesondere durch ein Aufspreizen oder ein Verengen und/oder durch die Bewegung des Arretierungselements (8).

4. Sondenhalterung (1, 2, 3, 4) nach einem der vorstehenden Ansprüche, **dadurch gekennzeichnet, dass** die betätigbare Handhabe (10, 11, 12) einen betätigbaren Betätigungshebel (11) oder eine um die Längsachse des Zugangskanals drehbar angeordnete Betätigungsschraube (12) aufweist, die zur insbesondere stufenlosen Überführung des Arretierungselements (8) aus der ersten Position in die zweite Position ausgebildet ist, und/oder dass das Arretierungselement (8) gegen eine Rückstellkraft eines Rückstellelements (13) aus der ersten Position in die zweite Position insbesondere stufenlos bewegbar ist.

5. Sondenhalterung (1, 2, 3, 4) nach einem der vorstehenden Ansprüche, **dadurch gekennzeichnet, dass** das Halteelement (7, 7A, 7B) zum Einführen in eine oder die Öffnung (16), insbesondere zum Hintergreifen einer oder der Öffnung (16), ausgebildet ist und/oder dass das Halteelement (7, 7A, 7B) einen Haken aufweist, welcher insbesondere in einer Verlängerung einer Längsachse der Einsatzrichtung angeordnet ist.

6. Sondenhalterung (1, 2, 3, 4) nach einem der vorstehenden Ansprüche, **dadurch gekennzeichnet, dass** das Halteelement (7, 7A, 7B) zur vorzugsweise außenseitigen Befestigung der Sondenhalterung (1, 2, 3, 4) auf einem Rohrstutzen (23) ausgebildet ist und/oder dass das Halteelement (7, 7A, 7B) in radialer Richtung in Bezug auf die Längsachse der Einsatzrichtung gegen die Wand (15) des Rohres (26) pressbar ausgebildet ist, vorzugsweise derart, dass das Halteelement (7, 7A, 7B) eine schräg ausgebildete Fläche (14), vorzugsweise eine an der Innenseite eines Gehäuses (19) schräg ausgebildete Fläche (14), beaufschlagt, relativ zu welcher es, insbesondere zusammen mit dem Arretierungselement (8), bewegbar angeordnet ist, vorzugsweise derart, dass es bei einer Relativbewegung hin zur schrägen Fläche (14) durch diese in Richtung der Wand (15) abgelenkt wird und/oder dass es in der ersten Position einen kleineren Innendurchmesser definiert als in der zweiten Position.

7. Sondenhalterung (1, 2, 3, 4) nach einem der vorstehenden Ansprüche, **dadurch gekennzeichnet, dass** die Sondenhalterung (1, 2, 3, 4) mehrere, insbesondere unterschiedlich ausgebildete Haltelemente (7, 7A, 7B) aufweist, und/oder dass das Arretierungselement (8) oder ein oder das Gehäuse (19) wenigstens einen Standfuß (22) aufweist, der insbesondere seitlich versetzt zur Zugangsöffnung (6) angeordnet ist.

8. Sondenhalterung (1, 2, 3, 4) nach einem der vorstehenden Ansprüche, **dadurch gekennzeichnet, dass** das Arretierungselement (8) mittels eines Gewindes (17) und eines dazu passenden Gegengewindes (18) relativ zu dem Zugangselement (5) bewegbar angeordnet ist und/oder dass das Halteelement (7, 7A, 7B) und das Arretierungselement (8) zwischen sich einen insbesondere variablen Abstand definieren.

9. Sondenhalterung (1, 2, 3, 4) nach einem der vorstehenden Ansprüche, **dadurch gekennzeichnet, dass** das Zugangselement (5) und das Halteelement (7, 7A, 7B) miteinander verbunden sind, insbesondere derart, dass das Halteelement (7, 7A, 7B) vom Zugangselement (5) abnehmbar ausgebildet ist.

10. Sondenhalterung (1, 2, 3, 4) nach einem der vorstehenden Ansprüche, **dadurch gekennzeichnet, dass** die Sondenhalterung (1, 2, 3, 4), vorzugsweise an einem proximalen Ende der Zuführöffnung (6), insbesondere an einem proximalen Ende eines oder des Zuführkanals (9), ein Klemmelement (20) zur axialen Fixierung eines in die Zugangsöffnung (6), insbesondere in einen oder den Zuführkanal (9), eingesetztes Messinstruments eingerichtet ist.

11. Sondenhalterung (1, 2, 3, 4) nach einem der vorstehenden Ansprüche, **dadurch gekennzeichnet, dass** die Sondenhalterung (1, 2, 3, 4) ein insbesondere ringförmiges Dichtelement (21), insbesondere zum Abdichten eines Spalts zwischen der Öffnung (16) und dem Zugangselement (5), aufweist, welches vorzugsweise an der Zugangsöffnung (6) und/oder an der Außenseite des Zugangselementes (5), insbesondere an der Außenseite eines oder des Zugangskanals (9), angeordnet ist.

12. Sondenhalterung (1, 2, 3, 4) nach einem der vorstehenden Ansprüche, **dadurch gekennzeichnet, dass** die Sondenhalterung (1, 2, 3, 4) derart eingerichtet ist, dass durch die Relativbewegung des Arretierungselements (8) hin zu dem Zugangselement (5) eine Spann- und/oder Klemmkraft über das Halteelement (7, 7A, 7B) und/oder das Arretierungselement (8) auf die Wand (15) des Rohres (26) einwirkt und die Sondenhalterung (1, 2, 3, 4) an der Wand (15) fixierend befestigt.

13. Verfahren zur Befestigung eines Messinstruments an einer Öffnung (16) einer Wand (15) eines Rohres (26) mittels einer Sondenhalterung (1, 2, 3, 4) nach einem der Ansprüche 1 bis 12, wobei ein Zugangselement (5) über der Öffnung (16) derart angeordnet wird, dass eine Zugangsöffnung (6) auf die Öffnung (16) ausgerichtet ist, und wobei das Messinstrument in die Zugangsöffnung (6) eingeführt und fixiert wird, **dadurch gekennzeichnet, dass** das Zugangselement (5) an der Öffnung (16) durch eine vorzugsweise mit einer Schraubbewegung angetriebenen Positionsveränderung eines Arretierungselements (8) entlang einer Einsatzrichtung der Zugangsöffnung (6) mittels eines Halteelementes (7, 7A, 7B) festgeklemmt wird.

## Claims

1. Probe holder (1, 2, 3, 4) for a measuring instrument for measuring a measurement value of a fluid flowing through a pipe (26), having an access element (5) which can be fitted to an opening (16) in a wall (15), wherein the access element (5) has at least a portion of a continuous access opening (6), which is constructed for inserting the measuring instrument into the opening (16), and having a retention element (7, 7A, 7B) which is constructed to secure the probe holder (1, 2, 3, 4) to the wall (15) of the pipe (26), **characterized in that** an arresting element (8) is arranged so as to be able to be moved by means of an actuatable handle (10, 11, 12) relative to the access element (5) between a first position and a second position, wherein the arresting element (8) cooperates with the retention element (7, 7A, 7B) in such a manner that in the first position a state which fixes the securing is defined and in the second position a state which releases the securing is defined, **in that**, as a result of the relative movement of the arresting element (8) in the direction toward the access element (5), a force acts via the retention element (7, 7A, 7B) on the wall (15) of the pipe (26) and fixedly secures the probe holder (1, 2, 3, 4) to the wall (15), **in that** the access element (5) forms at least a portion of an access channel (9) for receiving the measuring instrument, **in that** the arresting element (8) is arranged outside the access channel (9), and **in that** the arresting element (8) is arranged so as to be able to be moved relative to the access element (5) in an insertion direction of the access opening (6) along a longitudinal axis of the access channel (9) between the first position and the second position, wherein the handle (10, 11, 12) is accessible for actuation from outside the pipe (26) when the measuring instrument is inserted.

2. Probe holder (1,2,3,4) according to Claim 1, **characterized in that** the access element (5) is constructed for fitting to an opening (16) in the wall (15) of the pipe (26).

3. Probe holder (1, 2, 3, 4) according to either of the preceding claims, **characterized in that** a clamping movement can be carried out with the retention element (7, 7A, 7B), in particular by means of an expansion or a narrowing and/or by the movement of the arresting element (8) .

4. Probe holder (1, 2, 3, 4) according to one of the preceding claims, **characterized in that** the actuatable handle (10, 11, 12) has an actuatable actuation lever (11) or an actuation screw (12) which is rotatably arranged about the longitudinal axis of the access channel and which is constructed for in particular stepless movement of the arresting element (8) from the first position into the second position and/or **in that** the arresting element (8) can be moved counter to a restoring force of a restoring element (13) from the first position into the second position, in particular in a stepless manner.

5. Probe holder (1, 2, 3, 4) according to one of the preceding claims, **characterized in that** the retention element (7, 7A, 7B) is constructed for introduction into an or the opening (16), in particular for engaging behind an or the opening (16), and/or **in that** the retention element (7, 7A, 7B) has a hook which is arranged in particular in an extension of a longitudinal axis of the insertion direction.

6. Probe holder (1, 2, 3, 4) according to one of the preceding claims, **characterized in that** the retention element (7, 7A, 7B) is constructed for preferably securing the probe holder (1, 2, 3, 4) to a pipe nozzle (23) at the outer side and/or **in that** the retention element (7, 7A, 7B) is constructed so as to be able to be pressed in a radial direction with respect to the longitudinal axis of the insertion direction against the wall (15) of the pipe (26), preferably in such a manner that the retention element (7, 7A, 7B) acts on a face (14) which is constructed in an oblique manner, preferably a face (14) which is constructed in an oblique manner, on the inner side of a housing (19), and relative to which it is movably arranged, in particular together with the arresting element (8), preferably in such a manner that, in the event of a relative movement in the direction toward the oblique face (14), it is redirected by the oblique face in the direction of the wall (15) and/or it defines in the first position a smaller inner diameter than in the second position.

7. Probe holder (1, 2, 3, 4) according to one of the preceding claims, **characterized in that** the probe holder (1, 2, 3, 4) has a plurality of retention elements (7, 7A, 7B), which are in particular constructed differently, and/or **in that** the arresting element (8) or a or the housing (19) has at least one standing base (22) which is arranged in particular laterally offset with respect to the access opening (6).

8. Probe holder (1, 2, 3, 4) according to one of the preceding claims, **characterized in that** the arresting element (8) is arranged so as to be able to be moved relative to the access element (5) by means of a thread (17) and a corresponding counter-thread (18) and/or **in that** the retention element (7, 7A, 7B) and the arresting element (8) define between them an in particular variable spacing.

9. Probe holder (1, 2, 3, 4) according to one of the preceding claims, **characterized in that** the access element (5) and the retention element (7, 7A, 7B) are connected to each other, in particular in such a manner that the retention element (7, 7A, 7B) is constructed so as to be able to be removed from the access element (5).

10. Probe holder (1, 2, 3, 4) according to one of the preceding claims, **characterized in that** the probe holder (1, 2, 3, 4) is configured, preferably at a proximal end of the supply opening (6), in particular at a proximal end of a or the supply channel (9), a clamping element (20) for axially fixing a measuring instrument which is inserted into the access opening (6), in particular into a or the supply channel (9).

11. Probe holder (1, 2, 3, 4) according to one of the preceding claims, **characterized in that** the probe holder (1, 2, 3, 4) has, in particular for sealing a gap between the opening (16) and the access element (5), an in particular annular sealing element (21) which is preferably arranged on the access opening (6) and/or at the outer side of the access element (5), in particular at the outer side of an or the access channel (9).

12. Probe holder (1, 2, 3, 4) according to one of the preceding claims, **characterized in that** the probe holder (1, 2, 3 4) is configured in such a manner that, as a result of the relative movement of the arresting element (8) in the direction toward the access element (5), a tensile and/or clamping force acts via the retention element (7, 7A, 7B) and/or the arresting element (8) on the wall (15) of the pipe (26) and fixedly secures the probe holder (1, 2, 3, 4) to the wall (15).

13. Method for securing a measuring instrument to an opening (16) of a wall (15) of a pipe (26) by means of a probe holder (1, 2, 3, 4) according to one of claims 1 to 12, wherein an access element (5) is arranged above the opening (16) in such a manner that an access opening (6) is orientated toward the opening (16), and wherein the measuring instrument is introduced and fixed in the access opening (6), **characterized in that** the access element (5) is clamped to the opening (16) by means of a position change of an arresting element (8), which change is preferably driven by means of a screw movement in an insertion direction of the access opening (6) by means of a retention element (7, 7A, 7B).

## Revendications

1. Fixation de sonde (1, 2, 3, 4) pour un instrument de mesure permettant la mesure d'une valeur de mesure d'un fluide s'écoulant à travers un tube (26), avec un élément d'accès (5) applicable à une ouverture (16) dans une paroi (15), dans laquelle l'élément d'accès (5) présente au moins une partie d'une ouverture d'accès passante (6), qui est configurée pour l'insertion de l'instrument de mesure dans l'ouverture (16), et avec un élément de retenue (7, 7A, 7B), qui est configuré pour la fixation de la fixation de sonde (1, 2, 3, 4) à la paroi (15) du tube (26), **caractérisée en ce qu'**un élément d'arrêt (8) est disposé de façon déplaçable entre une première position et une seconde position au moyen d'une poignée actionnable (10, 11, 12) par rapport à l'élément d'accès (5), dans laquelle l'élément d'arrêt (8) coopère avec l'élément de retenue (7, 7A, 7B) de telle manière que dans la première position un état fixant la fixation soit défini et que dans la seconde position un état libérant la fixation soit défini, **en ce que** par le mouvement relatif de l'élément d'arrêt (8) en direction de l'élément d'accès (5) une force agit par l'élément de retenue (7, 7A, 7B) sur la paroi (15) du tube (26) et fixe fermement la fixation de sonde (1, 2, 3, 4) à la paroi (15), **en ce que** l'élément d'accès (5) forme au moins une partie d'un canal d'accès (9) destiné à recevoir l'instrument de mesure, **en ce que** l'élément d'arrêt (8) est disposé à l'extérieur du canal d'accès (9), et **en ce que** l'élément d'arrêt (8) est disposé de façon déplaçable entre une première position et une seconde position par rapport à l'élément d'accès (5) le long d'une direction d'insertion de l'ouverture d'accès (6) le long d'un axe longitudinal du canal d'accès (9), dans laquelle la poignée (10, 11, 12) est accessible pour l'actionnement depuis l'extérieur du tube (26) lorsque l'instrument de mesure est inséré.

2. Fixation de sonde (1, 2, 3, 4) selon la revendication 1, **caractérisée en ce que** l'élément d'accès (5) est configuré pour être appliqué à une ouverture (16) dans la paroi (15) du tube (26).

3. Fixation de sonde (1, 2, 3, 4) selon l'une quelconque des revendications précédentes, **caractérisée en ce qu'**un mouvement de serrage peut être exécuté avec l'élément de retenue (7, 7A, 7B), en particulier par une expansion ou un rétrécissement et/ou par le mouvement de l'élément d'arrêt (8).

4. Fixation de sonde (1, 2, 3, 4) selon l'une quelconque des revendications précédentes, **caractérisée en ce que** la poignée actionnable (10, 11, 12) présente un levier d'actionnement actionnable (11) ou une vis d'actionnement (12) disposée de façon rotative autour de l'axe longitudinal du canal d'accès, qui est configurée pour le transfert en particulier continu de l'élément d'arrêt (8) de la première position à la seconde position, et/ou **en ce que** l'élément d'arrêt (8) peut être déplacé en particulier en continu de la première position à la seconde position contre la force de rappel d'un élément de rappel (13).

5. Fixation de sonde (1, 2, 3, 4) selon l'une quelconque des revendications précédentes, **caractérisée en ce que** l'élément de retenue (7, 7A, 7B) est configuré pour être introduit dans une ou dans l'ouverture (16), en particulier pour s'accrocher derrière une ou l'ouverture (16), et/ou **en ce que** l'élément de retenue (7, 7A, 7B) présente un crochet, qui est disposé en particulier dans un prolongement d'un axe longitudinal de la direction d'insertion.

6. Fixation de sonde (1, 2, 3, 4) selon l'une quelconque des revendications précédentes, **caractérisée en ce que** l'élément de retenue (7, 7A, 7B) est configuré pour la fixation de préférence à l'extérieur de la fixation de sonde (1, 2, 3, 4) sur un embout tubulaire (23) et/ou **en ce que** l'élément de retenue (7, 7A, 7B) peut être pressé en direction radiale par rapport à l'axe longitudinal de la direction d'insertion contre la paroi (15) du tube (26), de préférence de telle manière que l'élément de retenue (7, 7A, 7B) agisse sur une face formée en oblique (14), de préférence une face formée en oblique (14) sur le côté intérieur d'un boîtier (19), par rapport à laquelle il est disposé de façon mobile, en particulier de concert avec l'élément d'arrêt (8), de préférence de telle manière que lors d'un mouvement relatif en direction de la face oblique (14) il soit dévié par celle-ci en direction de la paroi (15) et/ou qu'il définisse dans la première position un plus petit diamètre intérieur que dans la seconde position.

7. Fixation de sonde (1, 2, 3, 4) selon l'une quelconque des revendications précédentes, **caractérisée en ce que** la fixation de sonde (1, 2, 3, 4) présente plusieurs éléments de retenue (7, 7A, 7B), en particulier de forme différente, et/ou **en ce que** l'élément d'arrêt (8) ou un ou le boîtier (19) présente au moins un pied (22), qui est disposé en particulier de façon décalée latéralement par rapport à l'ouverture d'accès (6).

8. Fixation de sonde (1, 2, 3, 4) selon l'une quelconque des revendications précédentes, **caractérisée en ce que** l'élément d'arrêt (8) est disposé de façon déplaçable par rapport à l'élément d'accès (5) au moyen d'un filet (17) et d'un filet opposé correspondant (18) et/ou **en ce que** l'élément de retenue (7, 7A, 7B) et l'élément d'arrêt (8) définissent entre eux une distance en particulier variable.

9. Fixation de sonde (1, 2, 3, 4) selon l'une quelconque des revendications précédentes, **caractérisée en ce que** l'élément d'accès (5) et l'élément de retenue (7, 7A, 7B) sont assemblés l'un à l'autre, en particulier de telle manière que l'élément de retenue (7, 7A, 7B) puisse être séparé de l'élément d'accès (5).

10. Fixation de sonde (1, 2, 3, 4) selon l'une quelconque des revendications précédentes, **caractérisée en ce que** la fixation de sonde (1, 2, 3, 4) est configurée, de préférence à une extrémité proximale de l'ouverture d'introduction (6), en particulier à une extrémité proximale d'un ou du canal d'introduction (9), en un élément de serrage (20) pour la fixation axiale d'un instrument de mesure inséré dans l'ouverture d'accès (6), en particulier dans un ou le canal d'introduction (9).

11. Fixation de sonde (1, 2, 3, 4) selon l'une quelconque des revendications précédentes, **caractérisée en ce que** la fixation de sonde (1, 2, 3, 4) présente un élément d'étanchéité en particulier annulaire (21), en particulier pour assurer l'étanchéité d'une fente entre l'ouverture (16) et l'élément d'accès (5), qui est disposé de préférence à l'ouverture d'accès (6) et/ou sur le côté extérieur de l'élément d'accès (5), en particulier sur le côté extérieur d'un ou du canal d'accès (9).

12. Fixation de sonde (1, 2, 3, 4) selon l'une quelconque des revendications précédentes, **caractérisée en ce que** la fixation de sonde (1, 2, 3, 4) est configurée de telle manière que par le mouvement relatif de l'élément d'arrêt (8) en direction de l'élément d'accès (5), une force de serrage et/ou de pinçage agisse par l'élément de retenue (7, 7A, 7B) et/ou l'élément d'arrêt (8) sur la paroi (15) du tube (26) et fixe fermement la fixation de sonde (1, 2, 3, 4) à la paroi (15).

13. Procédé de fixation d'un instrument de mesure à une ouverture (16) d'une paroi (15) d'un tube (26) au moyen d'une fixation de sonde (1, 2, 3, 4) selon l'une quelconque des revendications 1 à 12, dans lequel un élément d'accès (5) est disposé au-dessus de l'ouverture (16), de telle manière qu'une ouverture d'accès (6) soit alignée sur l'ouverture (16), et dans lequel l'instrument de mesure est inséré et fixé dans l'ouverture d'accès (6), **caractérisé en ce que** l'élément d'accès (5) est fixé à l'ouverture (16) au moyen d'un élément de retenue (7, 7A, 7B) par un changement de position, de préférence entraîné par un mouvement de vissage, d'un élément d'arrêt (8) le long d'une direction d'insertion de l'ouverture d'accès (6).
